# EUROPEAN PATENT SPECIFICATION

(11) **EP 2 526 273 B1**
(45) Date of publication and mention of the grant of the patent: **21.08.2019**
(21) Application number: 11733160.3
(22) Date of filing: 18.01.2011
(51) Int. Cl.: F01N 3/20, F02D 41/04, F02D 41/02, F01N 11/00

(54) **DEVICE AND METHOD FOR IMPROVING THE PERFORMANCE OF A MOTOR VEHICLE**
VORRICHTUNG UND VERFAHREN ZUR VERBESSERUNG DER LEISTUNG EINES KRAFTFAHRZEUGS
DISPOSITIF ET PROCÉDÉ POUR AMÉLIORER LES PERFORMANCES D'UN VÉHICULE AUTOMOBILE

(30) Priority: 18.01.2010 SE 1050041
(43) Date of publication of application: 28.11.2012
(73) Proprietor: Scania CV AB, 151 87 Södertälje (SE)
(72) Inventor: ERIKSSON, Lars, S-153 38 Järna (SE); KÜNKEL, Christian, S-152 57 Södertälje (SE)
(74) Representative: Scania CV AB
(86) International application number: PCT/SE2011/050045
(87) International publication number: WO 2011/087445

(56) References cited:
- EP-B1- 1 176 289
- FR-A1- 2 902 140
- FR-A1- 2 914 013
- SE-C2- 531 973
- US-A1- 2008 271 440
- US-A1- 2008 271 440
- US-A1- 2010 122 525

## Description

### TECHNICAL FIELD

The present invention relates to a method for improving the performance of a motor vehicle which has an engine and an exhaust system with a catalyst. The invention relates also to a computer programme product comprising programme code for a computer for implementing a method according to the invention. The invention relates also to a device for improving the performance of a motor vehicle which has an engine and an exhaust system with a catalyst and to a motor vehicle which is equipped with the device.

### BACKGROUND

In today's vehicles, SCR techniques are used for cleaning exhaust gases from the engine. SCR (selective catalytic reduction) is in many respects an attractive method for reducing the amount of emissions in the form of nitrogen oxides (NOₓ).

In one technique, an ammonia-based reductant, e.g. AdBlue, is supplied to an exhaust system of the vehicle to cause a chemical reaction in which ammonia (NH₃) and NOₓ are converted to nitrogen gas (N₂) and water in vapour phase. FR2914013 A1 discloses an example of such technology with a urea injection method in which the amount of urea to be injected is based on operation temperature. FR2902140 A1 discloses another example of such technology. US2008271440 A1 discloses a further example which includes a strategy for removing urea deposits from a catalyst.

However, said SCR technique entails certain disadvantages. One disadvantage is that certain ammonia-based solutions have a tendency in certain conditions to crystallise in the exhaust system. In certain extreme conditions the crystals may even be converted to various polymers. Both the crystals and the polymers are undesirable for several reasons, not only because they may adversely affect the exhaust gas flow in the exhaust system but also because they may damage the post-treatment system if they become detached from the location where they have formed. In particular, these crystals may damage an SCR catalyst situated downstream of the injector which supplies the ammonia-based solution.

Damage to the vehicle's post-treatment system is expensive for the driver or owner in compelling an unscheduled visit to a workshop for repair of the vehicle. The repair itself also entails certain costs and potentially large resource consumption.

There is therefore still a need to deal with the problems associated with certain SCR techniques.

### SUMMARY OF THE INVENTION

An object of the present invention is to propose a novel and advantageous method for improving the performance of a motor vehicle which has an engine and an exhaust system with a catalyst.

Another object of the invention is to propose a novel and advantageous device and a novel and advantageous computer programme for improving the performance of a motor vehicle which has an engine and an exhaust system with a catalyst.

A further object of the invention is to propose a method, a device and a computer programme for achieving a more robust vehicle exhaust system which results in a reduced amount of maintenance.

A further object of the invention is to propose a method, a device and a computer programme for achieving more cost-effective operation of a motor vehicle.

These objects are achieved with a method according to the appended claims.

An aspect of the invention proposes a method for improving the performance of a motor vehicle which has an engine and an exhaust system with a catalyst, comprising the steps of:
- determining whether a predetermined operating state of said vehicle is fulfilled which pertains to a situation in which there is increased risk of coating formation in the exhaust system; and
- if said operating state is fulfilled, applying at least one measure to counter said coating formation.

Predicting that formation of urea coating in solid form (crystals) in the vehicle's exhaust system is about to occur, and thereafter applying active measures to prevent it, achieves a reduced risk of obstruction of a post-treatment system of the vehicle. This avoids a driver of the vehicle having to make an unscheduled visit to a workshop for an expensive repair.

The step of determining the operating statecomprises determining whether the vehicle has been run statically during a certain time. Detecting unfavourable operation of the vehicle whereby urea injection in the exhaust system is directed at a point or a small defined region makes it possible for active measures to be applied to counter urea crystal formation. The invention utilises the fact that urea crystallisation in the exhaust system and the vehicle's operating state are correlated, in order to define limit values for determining static operation of the vehicle.

The step of determining the operating state comprises determining whether the standard deviation and/or the variance for the engine's speed are below a predetermined value during a certain time. The standard deviation and the variance are reliable measurements which involve no great burden upon the vehicle's calculation units. The engine's speed is a parameter which is currently already detected for various purposes, so an extra use of existing information can be achieved according to an aspect of the invention. Analysing engine speed variations over time makes it possible to determine reliably any static operation of the vehicle.

The step of determining the operating state may alternatively or additionally comprise determining whether the standard deviation and/or the variance for the vehicle's load are below a predetermined value during a certain time. The vehicle's load is a parameter which is currently already calculated for various purposes, so an extra use of existing information can be achieved according to an aspect of the invention. The vehicle's load may for example be expressed as a prevailing torque of an output shaft of its engine. Analysing vehicle load variations over time makes it possible to determine reliably any static operation of the vehicle.

According to a preferred embodiment, the step of determining the operating state may comprise determining whether the standard deviation and/or the variance for the vehicle's load and the speed of its engine are below a predetermined value during a certain time. Taking these variables into account makes it possible to achieve a more reliable method for improving the performance of a motor vehicle.

The method may further comprise the following steps before said measures are applied:
- determining a prevailing temperature of the catalyst and/or
- determining a prevailing gas mass flow downstream of the engine and/or
- determining a value which represents an amount of urea supplied to the exhaust system during a certain time.

Taking more parameters than, for example, engine speed and vehicle load into account before active measures are applied to prevent urea crystal formation in the exhaust system makes it possible to achieve a safer and more robust method for improving the vehicle's performance.

A choice of active measures may be made on the basis of, for example, a prevailing temperature of the catalyst, a prevailing gas mass flow downstream of the engine and/or a urea dosing history.

The step of applying a measure may comprise regulation of urea supply to the exhaust system. Reducing the amount of urea supplied may achieve improved conditions for vaporisation of urea which is already present in the exhaust system and for vaporisation of the reduced amount of urea which is to be supplied to the exhaust system.

The step of applying a measure may comprise varying the temperature of the exhaust gases downstream of the engine. This has the effect of effectively reducing the risk of urea crystal formation in the exhaust system. In particular, the step of adopting a measure may comprise temporarily raising the temperature of the exhaust gases downstream of the engine.

The temperature of the exhaust gases may be varied by controlling the engine in a predetermined way and/or by regenerating a particle filter of the exhaust system. Both of these are effective measures for relatively quickly raising the temperature of the exhaust gases.

The method is easy to implement in existing motor vehicles. Software for improving the performance of a motor vehicle which has an engine and an exhaust system with a catalyst according to the invention may be installed in a control unit of the vehicle during the manufacture of the vehicle. A purchaser of the vehicle may thus have the possibility of choosing the method's function as an option. Alternatively, software comprising programme code for applying the innovative method for improving the performance of a motor vehicle which has an engine and an exhaust system with a catalyst may be installed in a control unit of the vehicle on the occasion of updating at a service station, in which case the software may be loaded into a memory in the control unit. Implementing the innovative method is therefore cost-effective, particularly as no further sensors need be installed in the vehicle. Relevant hardware is currently already present in the vehicle. The invention therefore represents a cost-effective solution to the problems indicated above.

Software which comprises programme code for improving the performance of a motor vehicle which has an engine and an exhaust system with a catalyst is easy to upgrade or replace. Different parts of the software containing programme code for improving the performance of a motor vehicle may also be replaced independently of one another. This modular configuration is advantageous from a maintenance perspective.

An aspect of the invention proposes a device for improving the performance of a motor vehicle which has an engine and an exhaust system with a catalyst. The device comprises means for determining whether a predetermined operating state of said vehicle is fulfilled which pertains to a situation in which there is increased risk of coating formation in the exhaust system; and means for applying, if said operating state is fulfilled, at least one measure to counter said coating formation.

The device further comprises means for determining whether the vehicle has been run statically during a certain time.

The device further comprises means for determining whether the standard deviation and/or the variance for the engine's speed are below a predetermined value during a certain time.

Alternatively or additionally, the device may further comprise means for determining whether the standard deviation and/or the variance for the vehicle's load are below a predetermined value during a certain time.

According to a preferred embodiment, the device may comprise means for determining whether the standard deviation and/or means for the variance for the vehicle's load and the speed of its engine are below a predetermined value during a certain time. Taking these variables into account makes it possible to achieve a more reliable device for improving the performance of a motor vehicle.

The device may further comprise means for determining a prevailing temperature of the catalyst and/or means for determining a prevailing gas mass flow downstream of the engine and/or means for determining a value which represents an amount of urea supplied to the exhaust system during a certain time.

The device may further comprise means for regulation of urea supply to the exhaust system.

The device may further comprise means for varying the temperature of the exhaust gases downstream of the engine. In particular, said means are adapted to temporarily raising the temperature of the exhaust gases downstream of the engine.

The means for varying the temperature of the exhaust gases downstream of the engine may be adapted to controlling the engine in a predetermined way and/or to regenerating a particle filter of the exhaust system.

The above objects are also achieved with a motor vehicle which comprises the features of the device for improving the performance of a motor vehicle. The vehicle may be a truck, bus or passenger car.

An aspect of the invention proposes a device for improving the performance of a marine engine which has an exhaust system with a catalyst. The device comprises means for determining whether a predetermined operating state of said marine engine is fulfilled which pertains to a situation in which there is increased risk of coating formation in the exhaust system; and means for applying, if said operating state is fulfilled, at least one measure to counter said coating formation.

An aspect of the invention proposes a device for improving the performance of an industrial engine which has an exhaust system with a catalyst. The device comprises means for determining whether a predetermined operating state of said industrial engine is fulfilled which pertains to a situation in which there is increased risk of coating formation in the exhaust system; and means for applying, if said operating state is fulfilled, at least one measure to counter said coating formation.

It should be noted that the innovative method herein described for improving the performance of a motor vehicle may also be used for similarly improving the performance of other systems or products, e.g. a marine engine or an industrial engine. The industrial engine may be used to drive a generator. The marine engine may be situated on a watercraft, e.g. a road ferry.

An aspect of the invention proposes a computer programme for improving the performance of a motor vehicle, which computer programme comprises programme code stored on a computer-readable medium for causing an electronic control unit or another computer connected to the electronic control unit to perform steps according to the appended claims.

An aspect of the invention proposes a computer programme product comprising a programme code stored on a computer-readable medium for effecting method steps according to the appended claimswhen said computer programme is run on an electronic control unit or another computer connected to the electronic control unit.

Further objects, advantages and novel features of the present invention will become apparent to one skilled in the art from the following details, and also by applying the invention. Although the invention is described below, it should be noted that it is not confined to the specific details described. One skilled in the art who has access to the teachings herein will recognise further applications, modifications and incorporations within other fields, which are within the scope of the invention.

### BRIEF DESCRIPTION OF THE DRAWINGS

Fuller understanding of the present invention and further objects and advantages of it may be gathered from the following detailed description read in conjunction with the accompanying drawings, in which the same reference notations pertain to similar items in the various diagrams, and in which:
Figure 1 illustrates schematically a vehicle according to an embodiment of the invention;
Figure 2 illustrates schematically a subsystem for the vehicle depicted in

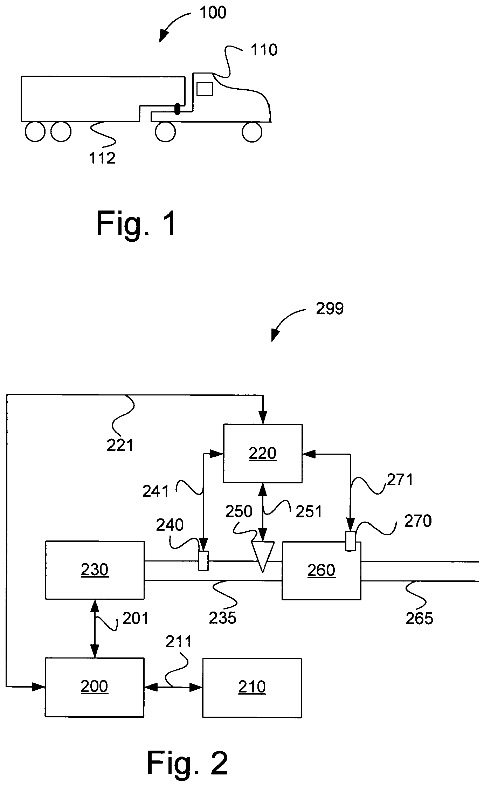

Figure 1, according to an embodiment of the invention;

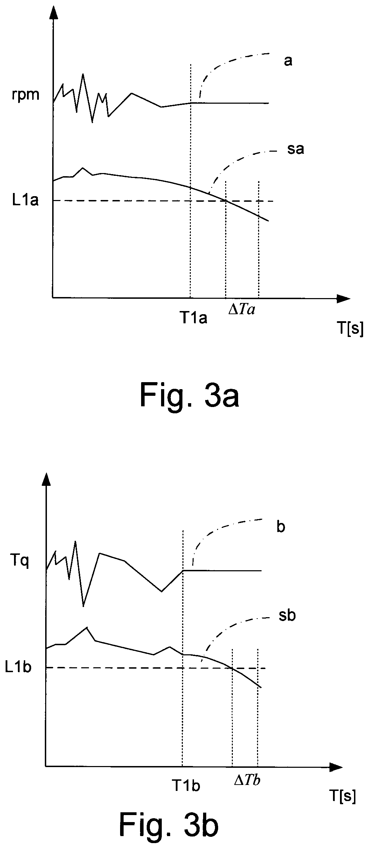

Figure 3a is a schematic graph of how a speed of an engine of the vehicle and its standard deviation depend on time, according to an example;
Figure 3b is a schematic graph of how a load of the vehicle and its standard deviation depend on time, according to an example;

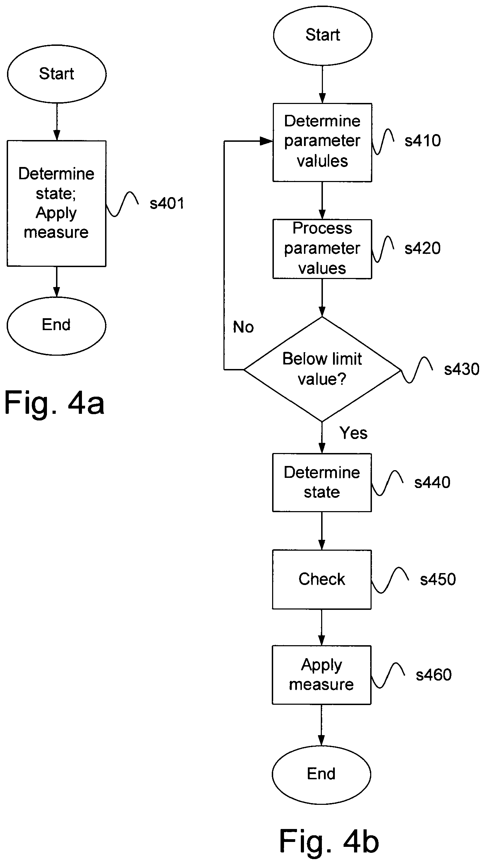

Figure 4a is a schematic flowchart of a method according to an embodiment of the invention;
Figure 4b is a more detailed schematic flowchart of a method according to an embodiment of the invention; and

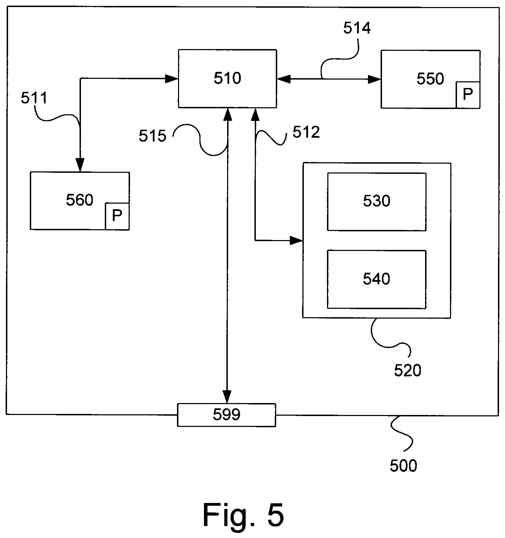

Figure 5 illustrates schematically a computer according to an embodiment of the invention.

### DETAILED DESCRIPTION OF THE DRAWINGS

Figure 1 depicts a side view of a vehicle 100. The exemplified vehicle 100 comprises a tractor unit 110 and a trailer 112. The vehicle may be a heavy vehicle, e.g. a truck or a bus. The vehicle may alternatively be a passenger car.

The term "link" refers herein to a communication link which may be a physical line such as an opto-electronic communication line, or a non-physical line such as a wireless connection, e.g. a radio link or microwave link.

The term "static operation" of the vehicle 100 refers herein to a state in which the vehicle is run in such a way that supplying urea to the exhaust system may entail increased risk of crystal formation of unvaporised urea. Crystal formation may occur when the vehicle is run at extremely static injection points, which usually occurs when it is run statically. The term "static operation" of the vehicle refers here to a state in which the vehicle is run in such a way that static conditions, e.g. current mass flow or current gas velocity, prevail such that there may be risk of crystal formation of unvaporised urea. Static operation of the vehicle may involve engine speed variations being small over time. Static operation of the vehicle may involve the vehicle's load variations being small over time.

The term "load" refers herein to a torque of an engine output shaft in the power train. The term "load" may alternatively refer to a torque of an engine output shaft in the power train relative to a maximum available torque. Specialists will appreciate that various different definitions of the term "load" may be used within the scope of the present invention.

Figure 2 depicts schematically a subsystem 299 of the vehicle 100. The subsystem 299 is situated in the tractor unit 110. The subsystem 299 comprises an engine 230 adapted to powering the vehicle 100. The engine 230 is a combustion engine. The engine 230 may be a diesel engine with any desired number of cylinders, e.g. 4, 5 or 6 cylinders.

The exhaust gases generated by the engine 230 during operation of the vehicle 100 are arranged to be led in a first pipe 235 to a catalyst 260 which in this example of an embodiment is a so-called SCR catalyst. The catalyst 260 is connected to a second pipe 265 which is provided to lead the exhaust gases from the vehicle 100 to the vehicle's surroundings. Specialists will appreciate that the subsystem 299 may comprise further components, e.g. a particle filter. These other components have been omitted to make the invention clearer.

A first sensor 240 is situated upstream of the catalyst 260 on the first pipe 235. The first sensor 240 is adapted to measuring a gas mass flow in the first pipe 235. The first sensor 240 is adapted to continuously detecting values which represent gas mass flows in the first pipe 235. The first sensor 240 is adapted to detecting gas mass flows in real time in the first pipe 235. The first sensor 240 is arranged for communication with an emission control unit 220 via a link 241. The first sensor 240 is adapted to continuously sending to the emission control unit 220 signals which contain information about a gas mass flow in the first pipe 235. The emission control unit 220 is adapted to receiving the signals sent from the first sensor 240.

A second sensor 270 is situated adjacent to the catalyst 260. The second sensor 270 is adapted to measuring a prevailing temperature of the catalyst 260. The second sensor 270 is adapted to continuously detecting a prevailing temperature of the catalyst 260. The second sensor 270 is adapted to detecting in real time a prevailing temperature of the catalyst 260. The second sensor 270 is arranged for communication with the emission control unit 220 via a link 271. The second sensor 270 is adapted to continuously sending to the emission control unit 220 signals which contain information about a prevailing temperature of the catalyst 260. The emission control unit 220 is adapted to receiving the signals sent from the second sensor 270.

The emission control unit 220 is arranged for communication with a fluid injector 250 via a link 251. The fluid injector 250 is situated on the first pipe 235. The emission control unit 220 is adapted to controlling the fluid injector 250 by control signals sent via the link 251. The fluid injector 250 is adapted to injecting a fluid into the first pipe 235 on the basis of the control signals received.

In this embodiment example, the fluid injector 250 is adapted to injecting into the first pipe 235 a liquid solution which contains urea. An example of a liquid solution is AdBlue. A container (not depicted) is provided to contain the liquid solution. The container is flow-connected to the fluid injector 250 via a passage which is arranged to lead the liquid solution to the fluid injector 250 for its injection into the first pipe 235.

Injecting AdBlue or some other suitable liquid solution containing urea makes possible a catalytic process in the catalyst 260 such that nitrogen oxides (NOₓ) react with ammonia (NH₃), whereby nitrogen gas (N₂) and water (H₂O) may be formed.

During static operation, AdBlue supplied to the first pipe 235 may be converted to crystals, with consequent build-up of an undesirable coating on the inside of the first pipe 235. Over a lengthy period of static operation of the vehicle, this coating may build up to become so thick that the first pipe 235 is blocked. The present invention aims to prevent this build-up of crystallised urea.

Specialists will appreciate that the first sensor 240, the second sensor 270 and the fluid injector 250 may be of appropriate kinds and that they may accordingly be configured appropriately in the subsystem 299.

According to a version, an engine control unit 200 is arranged for communication with the emission control unit 220 via a link 221. The engine control unit 200 is also referred to as a first control unit 200. The first control unit 200 is adapted to controlling the emission control unit 220 by continuously sending control signals to it. The first control unit 200 has an emission model stored in a memory in it. The first control unit 200 can use the stored emission model to estimate a prevailing gas mass flow in the first pipe 235. The first control unit 200 can also use the stored emission model to estimate a prevailing temperature in the catalyst 260. In one version of the invention the first control unit 200 is adapted to estimating a prevailing gas mass flow in the first pipe 235 which should occur in a given operating situation of the vehicle 100. Similarly, the first control unit 200 is adapted to estimating a prevailing temperature of the catalyst 260 which should occur in a given operating situation of the vehicle 100.

The first control unit 200 is adapted to calculating in a conventional way a prevailing load of the vehicle, e.g. a prevailing torque of an output shaft of the engine 230.

In an example, the first control unit 200 may take the form of a master and the emission control unit may take the form of a slave. The first control unit 200 is adapted to controlling urea injection to the first pipe 235 according to stored operating routines.

The first control unit 200 is adapted to regulating the temperature of the exhaust gases downstream of the engine, by, for example, altering the injection angle for at least one cylinder of the engine.

The first control unit 200 is adapted to controlling the engine 230 in a predetermined way in order to regulate the temperature of the exhaust gases downstream of the engine 230. The first control unit 200 is adapted to regenerating a particle filter of the exhaust system when necessary.

A second control unit 210 is arranged for communication with the first control unit 200 via a link 211. The second control unit 210 may be detachably connected to the first control unit 200. The second control unit 210 may be a control unit external to the vehicle 100. The second control unit 210 may be adapted to effecting the innovative method steps according to the invention. The second control unit 210 may be used to cross-load software to the first control unit 200, particularly software for effecting the innovative method. The second control unit 210 may alternatively be arranged for communication with the first control unit 200 via an internal network in the vehicle. The second control unit 210 may for example be adapted to performing substantially similar functions to the first control unit 200, e.g. to determining whether a predetermined operating state of said vehicle is fulfilled which pertains to a situation in which there is increased risk of coating formation in the exhaust system; and to applying, if said operating state is fulfilled, at least one measure to counter said coating formation.

According to the embodiment described with reference to Figure 2, the first sensor 240, the second sensor 270 and the fluid injector 250 are signal-connected to the emission control unit 220. It should be noted that other configurations are feasible, e.g. the first sensor 240, the second sensor 270 and the fluid injector 250 might be signal-connected to the first control unit 200 and/or the second control unit 210. Specialists will appreciate that various variants are feasible. Parts of the innovative method may by means of stored software be executed in the first control unit 200, the second control unit 210 and the emission control unit 220 or in a combination of them. It should be noted that the first control unit 200, the second control unit 210 and the emission control unit 220 may be physically separated or be partly or fully integrated.

Figure 3a is a schematic graph of how a speed *rpm* of an engine of the vehicle and its standard deviation sa depend on time, according to an example.

The engine's speed *rpm* is represented by graph a which in this example shows the vehicle 100 being run non-statically up to a time T1a after which it is run statically. Running the vehicle 100 in this static way increases the risk that an undesirable coating of crystallised urea or some other undesirable coating based on converted urea may form in the vehicle's exhaust system.

The standard deviation sa of the engine speed *rpm* is also illustrated in Figure 3a. For natural reasons, the standard deviation sa decreases towards a minimum (0) when the vehicle is run at a substantially constant engine speed, as after time T1a.

If the standard deviation sa of the engine speed *rpm* is below a predetermined level L1a during a certain time Δ*Ta,* it may be determined that an operating state of said vehicle is fulfilled which pertains to a situation in which there is increased risk of coating formation in the exhaust system. In other words, it is thus determined that the vehicle has been run in a static way during a certain critical time, resulting in increased risk of urea crystallisation in the exhaust system. The time Δ*Ta* is any predetermined time. The time Δ*Ta* may be of the order of one minute. The time *ΔTa* may be of the order of two or more minutes. The time Δ*Ta* may be of the order of one hour. The time Δ*Ta* may be of the order of two or more hours.

Figure 3b is a schematic graph of how a load *Tq* of the vehicle and its standard deviation *sb* depend on time, according to an example. In this example, the load *Tq* is the torque of an output shaft of the engine.

The load *Tq* is represented by graph b which in this example shows the vehicle 100 being run non-statically up to a time T1b after which it is run statically. Running the vehicle 100 in this static way increases the risk that an undesirable coating of crystallised urea or some other undesirable coating based on converted urea may form in the vehicle's exhaust system.

The standard deviation *sb* of the load *Tq* is also illustrated in Figure 3b. For natural reasons, the standard deviation *sb* decreases towards a minimum (0) when the vehicle is run at a substantially constant load, as after time T1b.

If the standard deviation *sb* of the load *Tq* is below a predetermined level L1b during a certain time Δ*Tb,* it may be determined that an operating state of said vehicle is fulfilled which pertains to a situation in which there is increased risk of coating formation in the exhaust system. In other words, it is thus determined that the vehicle has been run in a static way during a certain critical time, resulting in increased risk of urea crystallisation in the exhaust system. The time Δ*Tb* is any predetermined time. Δ*Tb* may be of the order of one minute. The time Δ*Tb* may be of the order of two or more minutes. The time Δ*Tb* may be of the order of one hour. The time Δ*Tb* may be of the order of two or more hours.

The above description with reference to Figure 3a and Figure 3b is of two different ways of determining whether there has during a predetermined time been a static operating state of the vehicle, resulting in an increased risk of crystal formation of urea supplied in the vehicle's exhaust system.

Specialists will appreciate that there are a number of different ways of determining whether a vehicle is run statically during a predetermined time.

For example, a method based on the variance of the vehicle's engine speed or load might be used in a similar way. An alternative way might be to determine a static operating state of the vehicle by analysing the characteristics of a first or second derivative over time for the engine's speed and/or load.

It should be noted that parameters other than engine speed and load may be used to determine whether there is a static operating state of the vehicle. For example, the exhaust gas mass flow parameter may be used to determine whether there is a static operating state of the vehicle. The term "static operating state" refers in this case to a situation where the vehicle is run in such a way that static conditions with regard to exhaust gas mass flows prevail, resulting in possible risk of crystal formation of unvaporised urea. Another parameter which may be used for determining whether there is a static operating state of the vehicle is the prevailing gas velocity where there may be risk of crystal formation of unvaporised urea. Combinations of the above parameters may also be used.

The parameters of engine speed and vehicle load have been adopted herein to clearly exemplify a pair of embodiments of the present invention. Similarly, use of the standard deviation of these parameters has been adopted to exemplify some embodiments of the present invention.

Figure 4a is a schematic flowchart of a method for improving the performance of a motor vehicle which has an engine and an exhaust system with a catalyst, according to an embodiment of the invention. The method comprises a first step s401 of:
- determining whether a predetermined operating state of said vehicle is fulfilled which pertains to a situation in which there is increased risk of coating formation in the exhaust system; and
- applying, if said operating state is fulfilled, at least one measure to counter said coating formation. The method ends after step s401.

Figure 4b is a more detailed schematic flowchart of a method for improving the performance of a motor vehicle which has an engine and an exhaust system with a catalyst, according to an embodiment of the invention.

The method comprises a first step s410 of determining any desired number of parameter values. In this example, a number of values are detected for prevailing speed *rpm* of the engine 230 of the vehicle 100. As an alternative example, a number of values for prevailing load *Tq* of the vehicle may be calculated in a conventional way. Step s410 is followed by a step s420.

Method step s420 comprises processing the parameter values determined. In this example, the standard deviation sa is calculated for the detected values for prevailing speed *rpm* of the engine 230. In the alternative example, the standard deviation *sb* is calculated for the calculated values for prevailing load *Tq* of the vehicle. Step 420 is followed by a step s430.

Method step s430 comprises determining whether the calculated standard deviation sa is below a predetermined threshold value L1a with respect to a predetermined time Δ*Ta.* Alternatively, step s430 comprises determining whether the calculated standard deviation *sb* is below a predetermined threshold value L1b with respect to a predetermined time Δ*Tb.* If so, a subsequent step s440 is performed. If not, step s410 is performed again.

Method step s440 comprises determining that there is a static operating state. This operating state pertains to a situation where there is increased risk of coating formation in the exhaust system. Step s440 is followed by a step s450.

Method step s450 comprises checking whether it is appropriate to apply measures to counter said coating formation. This may comprise determining a prevailing temperature of the catalyst 260 and comparing that temperature with a reference temperature in order to decide whether it is appropriate to apply said measures. Alternatively, it may comprise determining a prevailing gas mass flow downstream of the engine 230 and comparing that value with a reference mass flow in order to decide whether it is appropriate to apply said measures. Alternatively, it may comprise determining a value which represents an amount of urea which has been supplied to the exhaust system during a certain time in order to decide whether it is appropriate to apply said measures. Step s450 is followed by a step s460.

Method step s460 comprises applying, if appropriate on the basis of a result of a previous step, active measures to counter said coating formation. The method ends after step s460.

Figure 5 is a diagram of a version of a device 500. The control units 200 and 210 described with reference to Figure 2 may in a version comprise the device 500. The device 500 comprises a non-volatile memory 520, a data processing unit 510 and a read/write memory 550. The non-volatile memory 520 has a first memory element 530 in which a computer programme, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

A computer programme P is proposed which comprises routines for improving the performance of a motor vehicle 100 which has an engine 230 and an exhaust system with a catalyst 260, according to the innovative method. The programme P comprises routines for determining whether a predetermined operating state of said vehicle is fulfilled which pertains to a situation in which there is increased risk of coating formation in the exhaust system. The programme P comprises routines for applying, if said operating state is fulfilled, at least one measure to counter said coating formation, in accordance with the innovative method. The programme P may be stored in an executable form or in compressed form in a memory 560 and/or in a read/write memory 550. Where it is stated that the data processing unit 510 performs a certain function, it means that the data processing unit 510 effects a certain part of the programme which is stored in the memory 560 or a certain part of the programme which is stored in the read/write memory 550.

The data processing unit 510 can communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is adapted to communicating with the data processing unit 510 via a data bus 514. The data port 599 may have, for example, the links 201, 211, 221, 241, 251 and 271 connected to it (see Figure 2).

When data are received on the data port 599, they are stored temporarily in the second memory element 540. When input data received have been temporarily stored, the data processing unit 510 will be ready to effect code execution in a manner described above. According to a version, signals received on the data port 599 contain information about a prevailing speed of the engine 230 of the vehicle 100. According to a version, signals received on the data port 599 contain information about a prevailing load of the vehicle. The signals received on the data port 599 may be used by the device 500 to determine whether the vehicle 100 is being run in a way which entails increased risk of urea crystal formation in the exhaust system. If such is the case, the device 500 is adapted to applying active measures to counter the crystal formation. Parts of the methods herein described may be effected by the device 500 by means of the data processing unit 510 which runs the programme stored in the memory 560 or the read/write memory 550. When the device 500 runs the programme, methods herein described are executed. The foregoing description of the preferred embodiments of the present invention is provided for illustrative and descriptive purposes. It is not intended to be exhaustive, nor to limit the invention to the variants described. Many modifications and variations will obviously suggest themselves to one skilled in the art. The embodiments were chosen and described in order best to explain the principles of the invention and the practical applications thereof and hence to make it possible for specialists to understand the invention for various embodiments and with the various modifications appropriate to the intended use.

## Claims

1. A method for improving the performance of a motor vehicle (100; 110) which has an engine (230) and an exhaust system with a catalyst (260), wherein the catalyst (260) is arranged downstream of a fluid injector (250) arranged to supply the exhaust gas system with a liquid solution containing urea, which method comprises the steps of:
- determining (s440) whether a predetermined operating state of said vehicle (100; 110) is fulfilled, comprising determining (s430) whether the vehicle (100; 110) has been run statically during a certain time (Δ*Ta*; Δ*Tb*), which pertains to a situation in which there is increased risk of urea coating formation in the exhaust system; and
- applying (s460), if said operating state is fulfilled, at least one measure to counter said coating formation, **characterised by** the step of
- determining (s430) whether the standard deviation (sa) and/or the variance (s²a) for the engine's speed (rpm) is below a predetermined value (L1a) during a certain time (*ΔTa*), and/or
- determining (s430) whether the standard deviation (sb) and/or the variance (s²b) for the vehicle's load (Tq) are/is below a predetermined value (L1b) during a certain time (Δ*Tb*).

2. A method according to claim 1, further comprising the following steps before said measures are applied:
- determining (s450) a prevailing temperature of the catalyst (260) and/or
- determining (s450) a prevailing gas mass flow downstream of the engine (230) and/or
- determining (s450) a value which represents an amount of urea which has been supplied to the exhaust system during a certain time.

3. A method according to any one of the foregoing claims, in which the step of applying a measure comprises:
- regulating urea supply to the exhaust system.

4. A method according to any one of the foregoing claims, in which the step of applying a measure comprises:
- varying the temperature of the exhaust gases downstream of the engine (230).

5. A method according to claim 4, in which the temperature of the exhaust gases is varied by:
- controlling the engine (230) in a predetermined way and/or
- regenerating a particle filter of the exhaust system.

6. A device for improving the performance of a motor vehicle (100; 110) which has an engine (230) and an exhaust system with a catalyst (260), wherein the catalyst (260) is arranged downstream of a fluid injector (250) arranged to supply the exhaust gas system with a liquid solution containing urea, the device comprising
- means for determining whether the vehicle (100; 110) has been run statically during a certain time (Δ*Ta*; Δ*Tb*);
- means (200; 210; 220; 500) for determining whether a predetermined operating state of said vehicle (100; 110) is fulfilled, comprising determining whether the vehicle (100; 110) has been run statically during the certain time (Δ*Ta*; Δ*Tb*), which pertains to a situation in which there is increased risk of urea coating formation in the exhaust system; and
- means (200; 210; 220; 500) for applying, if said operating state is fulfilled, at least one measure to counter said coating formation, **characterized in that** the device further comprises:
- means (200; 210; 500) for determining whether the standard deviation (sa) and/or the variance (s²a) for the engine's speed (rpm) is below a predetermined value (L1a) during a certain time (Δ*Ta*), and/or
- means (200; 210; 500) for determining whether the standard deviation (sb) and/or the variance (s²b) for the vehicle's load (Tq) are/is below a predetermined value (L1b) during a certain time (*ΔTb*).

7. A device according to claim 6, further comprising:
- means (270, 220) for determining a prevailing temperature of the catalyst (260) and/or
- means (240; 220) for determining a prevailing gas mass flow downstream of the engine (230) and/or
- means (200; 210; 220) for determining a value which represents an amount of urea which has been supplied to the exhaust system during a certain time.

8. A device according to any one of claims 6-7, further comprising:
- means (200; 210; 220; 250) for regulating urea supply to the exhaust system.

9. A device according to any one of claims 6-8, further comprising:
- means (200; 210; 220) for varying the temperature of the exhaust gases downstream of the engine (230).

10. A device according to claim 9, such that means (200; 210; 220) for varying the temperature of the exhaust gases downstream of the engine (230) are adapted to
- controlling the engine (230) in a predetermined way and/or
- regenerating a particle filter of the exhaust system.

11. A motor vehicle (100; 110) comprising a device according to any one of claims 6-10.

12. A motor vehicle (100; 110) according to claim 11, which vehicle is any from among truck, bus or passenger car.

13. A computer programme (P) for improving the performance of a motor vehicle (100; 110) which has an engine (230) and an exhaust system with a catalyst (260), which computer programme (P) comprises programme code for causing an electronic control unit (200; 500) or another computer (210; 220; 500) connected to the electronic control unit (200; 500) to perform steps according to any of claims 1-5.

14. A computer programme product comprising a programme code stored on a computer-readable medium for effecting method steps according to any of claims 1-5 when said computer programme is run on an electronic control unit (200; 500) or another computer (210; 220; 500) connected to the electronic control unit (200; 500).

## Patentansprüche

1. Verfahren zum Verbessern der Leistung eines Kraftfahrzeugs (100; 110), das einen Motor (230) und ein Abgassystem mit einem Katalysator (260) aufweist, wobei der Katalysator (260) abströmseitig eines Fluidinjektors (250) angeordnet ist, der dazu eingerichtet ist, eine flüssige Lösung, die Harnstoff enthält, dem Abgassystem zuzuführen, wobei das Verfahren die Schritte umfasst:
- Bestimmen (s440), ob ein vorbestimmter Betriebszustand des Fahrzeugs (100; 110) erfüllt ist, umfassend ein Bestimmen (s430), ob das Fahrzeug (100; 110) während einer bestimmten Zeit (ΔTa; ΔTb) unverändert betrieben wurde, was einen Zustand betrifft, in welchem ein erhöhtes Risiko der Bildung eines Harnstoffschicht in dem Abgassystem besteht; und
- Anwenden (s460), falls der Betriebszustand erfüllt ist, zumindest einer Maßnahme, um der Bildung der Schicht entgegenzuwirken, **gekennzeichnet durch** die Schritte:
- Bestimmen (s430), ob die Standardabweichung (sa) und/oder die Varianz (s2a) für die Motordrehzahl (rpm) während einer bestimmten Zeit (ΔTa) unter einem vorbestimmten Wert (L1a) liegt, und/oder
- Bestimmen (s430), ob die Standardabweichung (sb) und/oder die Varianz (s2b) für die Last des Fahrzeugs (Tq) während einer bestimmten Zeit (ΔTb) unter einem vorbestimmten Wert (L1b) liegt.

2. Verfahren nach Anspruch 1, ferner umfassend die folgenden Schritte, bevor die Maßnahmen angewendet werden:
- Bestimmen (s450) einer vorherrschenden Temperatur des Katalysators (260) und/oder
- Bestimmen (s450) eines vorherrschenden Gasmasseflusses abströmseitig des Motors (230) und/oder
- Bestimmen (s450) eines Werts, der eine Menge von Harnstoff repräsentiert, die dem Abgassystem während einer bestimmten Zeit zugeführt wurde.

3. Verfahren nach einem der vorhergehenden Ansprüche, in welchem der Schritt des Anwendens einer Maßnahme umfasst:
- Regeln der Harnstoff-Zufuhr zu dem Abgassystem.

4. Verfahren nach einem der vorhergehenden Ansprüche, in welchem der Schritt des Anwendens einer Maßnahme umfasst:
- Variieren der Temperatur der Abgase abströmseitig des Motors (230).

5. Verfahren nach Anspruch 4, in welchem die Temperatur der Abgase variiert wird durch:
- Steuern des Motors (230) in einer vorbestimmten Weise und/oder
- Regenerieren eines Partikelfilters des Abgassystems.

6. Vorrichtung zum Verbessern der Leistung eines Kraftfahrzeugs (100; 110), das einen Motor (230) und ein Abgassystem mit einem Katalysator (260) aufweist, wobei der Katalysator (260) abströmseitig eines Fluidinjektors (250) angeordnet ist, der dazu eingerichtet ist, eine flüssige Lösung, die Harnstoff enthält, dem Abgassystem zuzuführen, wobei die Vorrichtung umfasst:
- Mittel zum Bestimmen, ob das Fahrzeug (100; 110) während einer bestimmten Zeit (ΔTa; ΔTb) unverändert betrieben wurde;
- Mittel (200; 210; 220; 500) zum Bestimmen, ob ein vorbestimmter Zustand des Fahrzeugs (100; 110) erfüllt ist, umfassend ein Bestimmen, ob das Fahrzeug (100; 110) während der bestimmten Zeit (ΔTa; ΔTb) unverändert betrieben wurde, was einen Zustand betrifft, in welchem ein erhöhtes Risiko der Bildung eines Harnstoffschicht in dem Abgassystem besteht; und
- Mittel (200; 210; 220; 500) zum Anwenden (s460), falls der Betriebszustand erfüllt ist, zumindest einer Maßnahme, um der Bildung der Schicht entgegenzuwirken, **dadurch gekennzeichnet, dass** die Vorrichtung ferner umfasst:
- Mittel (200; 210; 500) zum Bestimmen (s430), ob die Standardabweichung (sa) und/oder die Varianz (s2a) für die Motordrehzahl (rpm) während einer bestimmten Zeit (ΔTa) unter einem vorbestimmten Wert (L1a) liegt, und/oder
- Mittel (200; 210; 500) zum Bestimmen (s430), ob die Standardabweichung (sb) und/oder die Varianz (s2b) für die Last des Fahrzeugs (Tq) während einer bestimmten Zeit (ΔTb) unter einem vorbestimmten Wert (L1b) liegt.

7. Vorrichtung nach Anspruch 6, ferner umfassend:
- Mittel (270, 220) zum Bestimmen einer vorherrschenden Temperatur des Katalysators (260) und/oder
- Mittel (240; 220) zum Bestimmen eines vorherrschenden Gasmasseflusses abströmseitig des Motors (230) und/oder
- Mittel (200; 210; 220) zum Bestimmen eines Werts, der eine Menge von Harnstoff repräsentiert, die dem Abgassystem während einer bestimmten Zeit zugeführt wurde.

8. Vorrichtung nach einem der Ansprüche 6 bis 7, ferner umfassend:
- Mittel (200; 210; 220; 250) zum Regeln der Harnstoff-Zufuhr zu dem Abgassystem.

9. Vorrichtung nach einem der Ansprüche 6 bis 8, ferner umfassend:
- Mittel (200; 210; 220) zum Variieren der Temperatur der Abgase abströmseitig des Motors (230).

10. Vorrichtung nach Anspruch 9, wobei Mittel (200; 210; 220) zum Variieren der Temperatur der Abgase abströmseitig des Motors (230) eingerichtet sind zum:
- Steuern des Motors (230) in einer vorbestimmten Weise und/oder
- Regenerieren eines Partikelfilters des Abgassystems.

11. Kraftfahrzeug (100; 110), umfassend eine Vorrichtung gemäß einem der Ansprüche 6 bis 10.

12. Kraftfahrzeug (100; 110) nach Anspruch 11, wobei das Fahrzeug eines von einem Lastwagen, einem Bus oder einem Personenfahrzeug ist.

13. Computerprogramm (P) zum Verbessern der Leistung eines Kraftfahrzeugs (100; 110), das einen Motor (230) und ein Abgassystem mit einem Katalysator (260) aufweist, wobei das Computerprogramm (P) Programmcode zum Veranlassen einer elektronischen Steuereinheit (200; 500) oder eines anderen mit der elektronischen Steuereinheit (200; 500) verbundenen Computers (210; 220; 500) dazu umfasst, Schritte gemäß einem der Ansprüche 1 bis 5 durchzuführen.

14. Computerprogrammprodukt, umfassend auf einem computerlesbaren Medium gespeicherten Programmcode zum Bewirken von Verfahrensschritten gemäß einem der Ansprüche 1 bis 5, wenn der Programmcode auf einer elektronischen Steuereinheit (200; 500) oder einem anderen mit der elektronischen Steuereinheit (200; 500) verbundenen Computer (210; 220; 500) ausgeführt wird.

## Revendications

1. Procédé pour l'amélioration des performances d'un véhicule motorisé (100 ; 110) qui a un moteur (230) et un système d'échappement avec un catalyseur (260), dans lequel le catalyseur (260) est disposé en aval d'un injecteur de liquide (250) disposé pour alimenter le système de gaz d'échappement avec une solution liquide contenant de l'urée, lequel procédé comprend les étapes de
- la détermination (s440) de si un état opérationnel prédéterminé dudit véhicule (100 ; 110) est rempli, comprenant la détermination (s430) de si le véhicule (100 ; 110) a fonctionné de manière statique durant un certain temps (Δ*Ta*; Δ*Tb*), qui se rapporte à une situation dans laquelle il y a un risque accru de formation de couche d'urée dans le système d'échappement ; et
- l'application (s460), si ledit état de fonctionnement est atteint, d'au moins une mesure pour s'opposer à ladite formation de couche, **caractérisée par** l'étape de
- la détermination (s430) de si l'écart-type (sa) et/ou la variance (s²a) pour la vitesse du moteur (tr/min) est inférieure à une valeur prédéterminée (L1a) durant un certain temps (Δ*Ta*), et/ ou
- la détermination (s430) de si l'écart-type (sb) et/ou la variance (s²b) pour la charge du véhicule (Tq) sont/est inférieur(es) à une valeur prédéterminée (L1b) durant un certain temps Δ*Tb*).

2. Procédé selon la revendication 1, comprenant en outre les étapes suivantes avant que lesdites mesures ne soient appliquées :
- la détermination (s450) d'une température en vigueur du catalyseur (260) et/ou
- la détermination (s450) d'un débit de masse de gaz en aval du moteur (230) et/ou
- la détermination (s450) d'une valeur qui représente une quantité d'urée qui a été fournie au système d'échappement pendant un certain temps.

3. Procédé selon l'une quelconque des revendications précédentes, dans lequel l'étape d'application d'une mesure comprend :
- la régulation de l'alimentation en urée du système d'échappement.

4. Procédé selon l'une quelconque des revendications précédentes, dans lequel l'étape d'application d'une mesure comprend :
- la variation de la température des gaz d'échappement en aval du moteur (230).

5. Procédé selon la revendication 4, dans lequel la température des gaz d'échappement est variée par :
- la commande du moteur (230) d'une manière prédéterminée et/ou
- la régénération d'un filtre à particules du système d'échappement.

6. Dispositif pour l'amélioration des performances d'un véhicule motorisé (100 ; 110) qui a un moteur (230) et un système d'échappement avec un catalyseur (260), dans lequel le catalyseur (260) est disposé en aval d'un injecteur de liquide (250) disposé pour alimenter le système de gaz d'échappement avec une solution liquide contenant de l'urée, lequel procédé comprenant :
- des moyens pour la détermination de si le véhicule (100 ; 110) a fonctionné de manière statique durant un certain temps (Δ*Ta*; Δ*Tb*) ;
- des moyens (200 ; 210 ; 220 ; 500) pour la détermination de si un état opérationnel prédéterminé dudit véhicule (100 ; 110) est rempli, comprenant la détermination de si le véhicule (100 ; 110) a fonctionné de manière statique durant le certain temps (Δ*Ta* ; Δ*Tb*), qui se rapporte à une situation dans laquelle il y a un risque accru de formation de couche d'urée dans le système d'échappement ; et
- des moyens (200 ; 210 ; 220 ; 500) pour l'application, si ledit état de fonctionnement est atteint, d'au moins une mesure pour s'opposer à ladite formation de couche, **caractérisée en ce que** le dispositif comprend en outre :
- des moyens (200 ; 210 ; 500) pour la détermination de si l'écart type (sa) et/ou la variance (s²a) pour la vitesse du moteur (tr/min) est inférieure à une valeur prédéterminée (L1a) durant un certain temps (Δ*Ta*), et/ou
- des moyens (200 ; 210 ; 500) pour la détermination de si l'écart type (sb) et/ou la variance (s²b) pour la charge du véhicule (Tq) sont/est inférieur(es) à une valeur prédéterminée (L1b) durant un certain temps Δ*Tb*).

7. Dispositif selon la revendication 6, comprenant en outre
- des moyens (270, 220) pour la détermination d'une température en vigueur du catalyseur (260) et/ou
- des moyens (240 ; 220) pour la détermination d'un débit de masse de gaz en vigueur en aval du moteur (230) et/ou
- des moyens (200 ; 210 ; 220) pour la détermination d'une valeur qui représente une quantité d'urée qui a été fournie au système d'échappement durant un certain temps.

8. Dispositif selon l'une quelconque des revendications 6-7, comprenant en outre :
- des moyens (200 ; 210 ; 220 ; 250) pour la régulation de l'alimentation en urée du système d'échappement.

9. Dispositif selon l'une quelconque des revendications 6-8, comprenant en outre :
- des moyens (200 ; 210 ; 220) pour la variation de la température des gaz d'échappement en aval du moteur (230).

10. Dispositif selon la revendication 9, de sorte que des moyens (200 ; 210 ; 220) pour la variation de la température des gaz d'échappement en aval du moteur (230) sont adaptés pour
- la commande du moteur (230) d'une manière prédéterminée et/ou
- la régénération d'un filtre à particules du système d'échappement.

11. Véhicule à moteur (100 ; 110) comprenant un dispositif selon l'une quelconque des revendications 6-10.

12. Véhicule à moteur (100 ; 110) selon la revendication 11, lequel véhicule est l'un quelconque d'un camion, d'un bus ou d'une voiture particulière.

13. Programme informatique (P) pour l'amélioration des performances d'un véhicule à moteur (100 ; 110), qui a un moteur (230) et un système d'échappement avec un catalyseur (260), lequel programme informatique (P) comprend un code de programme pour amener une unité de commande électronique (200 ; 500) ou un autre ordinateur (210 ; 220 ; 500) connecté à l'unité de commande électronique (200 ; 500) à exécuter les étapes selon l'une quelconque des revendications 1-5.

14. Produit de programme informatique comprenant un code de programme stocké sur un support lisible par ordinateur pour l'exécution d'étapes de procédé selon l'une quelconque des revendications 1-5 lorsque ledit programme informatique est exécuté sur une unité de commande électronique (200 ; 500) ou sur un autre ordinateur (210 ; 220 ; 500) connecté à l'unité de commande électronique (200 ; 500).
